# FASCICULE DE BREVET EUROPEEN

(11) **EP 3 558 647 B1**
(45) Date de publication et mention de la délivrance du brevet: **21.12.2022**
(21) Numéro de dépôt: 17829269.4
(22) Date de dépôt: 21.12.2017
(51) Int. Cl.: A45D 34/04, B29C 45/14, B29C 67/20, B29K 23/00, B29K 467/00, B29K 509/08, B29L 9/00, B29L 31/00

(54) **PROCÉDÉ DE FABRICATION D'UN ORGANE D'APPLICATION DE PRODUIT COSMÉTIQUE LIQUIDE, ORGANE D'APPLICATION ET APPLICATEUR.**
VERFAHREN ZUR HERSTELLUNG EINES ANWENDUNGSELEMENTS ZUM AUFTRAGEN EINES FLÜSSIGEN KOSMETIKPRODUKTS, ANWENDUNGSELEMENT UND APPLIKATOR
METHOD FOR MANUFACTURING AN APPLICATION MEMBER FOR APPLYING LIQUID COSMETIC PRODUCT, APPLICATION MEMBER AND APPLICATOR

(30) Priorité: 23.12.2016 FR 1663332
(43) Date de publication de la demande: 30.10.2019
(73) Titulaire: Parfums Christian Dior, 75008 Paris (FR)
(72) Inventeur: LEFEVRE, Savine, 60200 Compiegne (FR); GAUTIER, François, 92700 Colombes (FR)
(74) Mandataire: Cabinet Beau de Loménie
(86) Numéro de dépôt international: PCT/FR2017/053760
(87) Numéro de publication internationale: WO 2018/115759

(56) Documents cités:
- WO-A1-01/65937
- WO-A1-2010/013131
- WO-A1-2018/055306
- FR-A1- 2 805 720
- FR-A1- 2 876 557

## Description

Le présent exposé concerne un procédé de fabrication d'un organe d'application pour la distribution de produit cosmétique, en particulier de produit cosmétique liquide ou semi-liquide, par exemple des huiles cosmétiques, des parfums, des fonds de teint fluide, ou des produits de maquillage notamment des lèvres.

On connait des applicateurs de produit liquide comprenant un tampon en mousse qui, par capillarité, se charge en produit liquide. Le produit est distribué par contact entre le tampon imbibé de produit liquide et un utilisateur, en particulier la peau de cet utilisateur. Cependant, la quantité de produit appliqué dépend de la pression exercée sur le tampon par l'utilisateur entrainant la compression du tampon et une expulsion du produit contenu dans le tampon. Il existe donc un risque non négligeable de coulure du produit liquide, ce qui n'est pas souhaitable.

Aussi, il existe un besoin pour un organe d'application permettant de mieux contrôler la quantité de produit appliqué et un procédé de fabrication d'un tel organe d'application.

WO2018/055306, qui décrit un distributeur de produit fluide, est un document compris dans l'état de la technique selon l'article 54(3) CBE. D'autres technologies de l'art antérieur sont connues des documents WO 2010/013131 A1, FR 2876557 A1 et FR 2805720 A1.

### Objet et résumé de l'invention

Le présent exposé vise à remédier au moins en partie à ces inconvénients.

A cet effet, la présente invention concerne un procédé de fabrication d'un organe d'application de produit cosmétique liquide selon la revendication 1.

On entend par noyau poreux, un noyau comportant une porosité ouverte et permettant à un liquide de circuler au travers du noyau par capillarité.

Le noyau poreux étant en matériau fritté, le noyau poreux est rigide ou très peu comprimable et il est peu sensible à la pression appliquée par un utilisateur. Aussi, le noyau poreux ne se déforme pas ou très peu sous la pression appliquée par l'utilisateur ce qui évite l'expulsion du produit par compression du noyau.

En outre, la coque étant surmoulée sur le noyau poreux, une étanchéité est créée entre le noyau et la coque. En effet, l'organe d'application est obtenu en disposant le noyau poreux dans un moule et en injectant la matière fluide destinée à former la coque une fois solidifiée dans le moule. La pression d'injection de la matière fluide dans le moule permet de plaquer cette matière fluide entre le moule et le noyau poreux, de sorte que l'on forme une étanchéité entre le noyau et la coque surmoulée sans altérer la structure poreuse interne du noyau.

L'orifice d'entrée du produit cosmétique permet au produit cosmétique de pénétrer dans le noyau poreux et l'orifice de distribution du produit cosmétique permet au produit cosmétique de sortir du noyau pour être distribué lorsque l'utilisateur pose l'organe d'application sur la peau en mettant en contact le noyau accessible par l'orifice de distribution contre la peau. Ainsi, le produit cosmétique est canalisé entre l'orifice d'entrée et l'orifice de distribution du produit cosmétique.

Le produit cosmétique liquide peut alors être distribué par l'orifice de distribution de la coque surmoulée. Ainsi, seules les parties du noyau qui ne sont pas couvertes par la coque surmoulée permettent la distribution de produit cosmétique. Cela permet d'avoir un organe d'application propre qui ne se salit pas sur la coque surmoulée et de limiter la partie du noyau poreux qui est visible à travers l'orifice de distribution et en contact avec la peau de l'utilisateur.

On comprend que la coque surmoulée peut comporter plusieurs orifices d'entrée et/ou plusieurs orifices de distribution. Le dimensionnement de chacun de ces orifices permet de définir le débit optimal d'application du produit.

Le noyau étant poreux, l'étanchéité peut être réalisée mécaniquement lors de l'étape de surmoulage de la coque sur le noyau. En effet, le matériau formant la coque peut pénétrer légèrement dans les porosités ouvertes du noyau et former des points d'ancrage multiples de la coque sur le noyau.

On obtient donc un organe d'application de produit cosmétique liquide permettant de distribuer proprement du produit cosmétique liquide indépendamment de la pression appliquée par l'utilisateur sur l'organe d'application.

La fabrication du noyau poreux peut comporter une étape d'usinage du noyau poreux.

Le noyau poreux étant en matériau fritté, le noyau poreux est rigide et peut être facilement usiné.

On peut ainsi former facilement des saillies en surface du noyau poreux. Ces saillies, une fois la coque surmoulée sur le noyau poreux, font saillie hors de la coque surmoulée à travers les orifices de distribution. Les surfaces des saillies qui sont disposées à l'extérieur de la coque surmoulée forment ensemble une surface d'application du produit cosmétique liquide.

Les saillies peuvent former un motif qui fait saillie de la coque surmoulée.

On peut coupler la fonction de distribution du produit cosmétique à une fonction esthétique et/ou fonctionnelle par exemple pour le massage lors de l'application. La coque surmoulée peut couvrir une partie précise du noyau poreux, entre les saillies, et former un motif tel qu'un logo ou un décor. La surface extérieure de la coque peut être lisse. En complément ou alternativement la surface extérieure de la coque peut comporter un état de surface ou des motifs permettant par exemple le massage lors de l'application.

Le matériau fritté peut comprendre une polyoléfine, par exemple du polypropylène ou du polyéthylène.

Les polyoléfines sont des polymères aliphatiques saturés qui présentent une grande inertie chimique, c'est-à-dire qu'elles ne réagissent pas ou peu avec les produits qui sont en contact avec elles. En particulier, le polypropylène est une polyoléfine qui est bon marché, inodore et non toxique et le polyéthylène est une polyoléfine qui est bon marché et résistant.

Le matériau fritté peut comprendre un polyester, par exemple du polytéréphtalate d'éthylène (PET), ou du verre.

Le verre est un matériau inerte et peut également donner une sensation de fraîcheur à l'utilisateur lorsque le noyau est en contact avec la peau de l'utilisateur.

La coque surmoulée peut comprendre un polymère comprenant une polyoléfine, par exemple du polypropylène ou du polyéthylène.

Les polyoléfines sont des polymères aliphatiques saturés qui présentent une grande inertie chimique, c'est-à-dire qu'elles ne réagissent pas ou peu avec les produits qui sont en contact avec elles. En particulier, le polypropylène est une polyoléfine qui est bon marché, inodore et non toxique et le polyéthylène est une polyoléfine qui est bon marché et résistant.

Lorsque le noyau poreux et la coque surmoulée comprennent par exemple une polyoléfine, en plus de l'étanchéité formée mécaniquement, il peut se former une liaison chimique entre le noyau poreux et la coque lors du surmoulage de la coque sur le noyau poreux. L'étanchéité entre le noyau poreux et la coque surmoulée est améliorée.

La coque surmoulée peut comprendre un polymère comprenant un polyester, par exemple du polytéréphtalate d'éthylène ou du PCTA.

Les polyesters, comme par exemple le PET, outre leur effet esthétique qui est de présenter une très grande brillance, permettent également de réaliser une coque transparente, notamment si l'on désire que le noyau reste visible. Le PCTA regroupe une famille de copolyester amorphe comprenant du polycyclohexylènediméthylène téréphtalate copolymérisé avec un autre diacide (phtalique).

De même, lorsque le noyau poreux et la coque surmoulée comprennent par exemple un polyester, en plus de l'étanchéité formée mécaniquement, il peut se former une liaison chimique entre le noyau poreux et la coque lors du surmoulage de la coque sur le noyau poreux. L'étanchéité entre le noyau poreux et la coque surmoulée est améliorée.

La coque surmoulée peut comprendre un polymère souple, par exemple un copolymère séquencé styrène-éthylène-butylène-styrène (SEBS).

Le polymère souple permet notamment de réaliser une coque surmoulée transparente qui permet de voir le noyau poreux et le produit cosmétique à travers la coque surmoulée. Un polymère souple apporte également du confort à l'application avec une sensation de souplesse et de douceur.

La coque surmoulée peut avoir une épaisseur inférieure à 2,0 mm, de préférence inférieure à 1,5 mm, encore plus de préférence inférieure à 1,0 mm.

L'épaisseur de la coque surmoulée est relativement mince. Pour un encombrement donné, on privilégie ainsi le volume du noyau. On peut ainsi avoir un noyau de grand volume qui permet une grande stabilité de distribution de produit.

La coque surmoulée peut comprendre une jupe de fixation de l'organe d'application sur un réservoir.

Il est donc facile de fixer l'organe d'application sur le réservoir contenant le produit cosmétique liquide. Par ailleurs, la jupe de fixation étant réalisée d'une seule pièce avec la coque surmoulée, c'est-à-dire que la jupe de fixation est venue de matière avec la coque surmoulée, on réduit le nombre de pièces à assembler pour fabriquer un applicateur de produit cosmétique liquide comprenant un tel organe d'application. On réduit donc le nombre d'étapes de montage. La fabrication de l'applicateur est donc simplifiée. Alternativement l'organe d'application est fixé au réservoir au moyen d'une frette. La coque surmoulée peut également comprendre les moyens d'étanchéité entre le réservoir et l'applicateur, par exemple une lèvre ou un joint. Les parois du réservoir peuvent être rigides ou souples.

La présente invention concerne également un organe d'application de produit cosmétique liquide obtenu par surmoulage d'une coque sur un noyau poreux en matériau fritté, selon la revendication 10.

Le présent exposé concerne aussi un applicateur de produit cosmétique liquide à distribuer comprenant un réservoir destiné à contenir le produit cosmétique à distribuer et un organe d'application tel que défini précédemment, l'organe d'application étant assemblé sur le réservoir.

### Brève description des dessins

D'autres caractéristiques et avantages de l'invention ressortiront de la description suivante de modes de réalisation de l'invention, donnés à titre d'exemples non limitatifs, en référence aux figures annexées, sur lesquelles :
- la figure 1 est une vue en section d'un applicateur de produit cosmétique liquide obtenu par un procédé de fabrication selon un mode de réalisation de l'invention ;
- la figure 2 est une vue en perspective, vue du dessus, de l'applicateur de la figure 1 ; et
- la figure 3 est un ordinogramme représentant les étapes du procédé de fabrication de l'organe d'application de produit cosmétique liquide de la figure 1.

### Description détaillée de l'invention

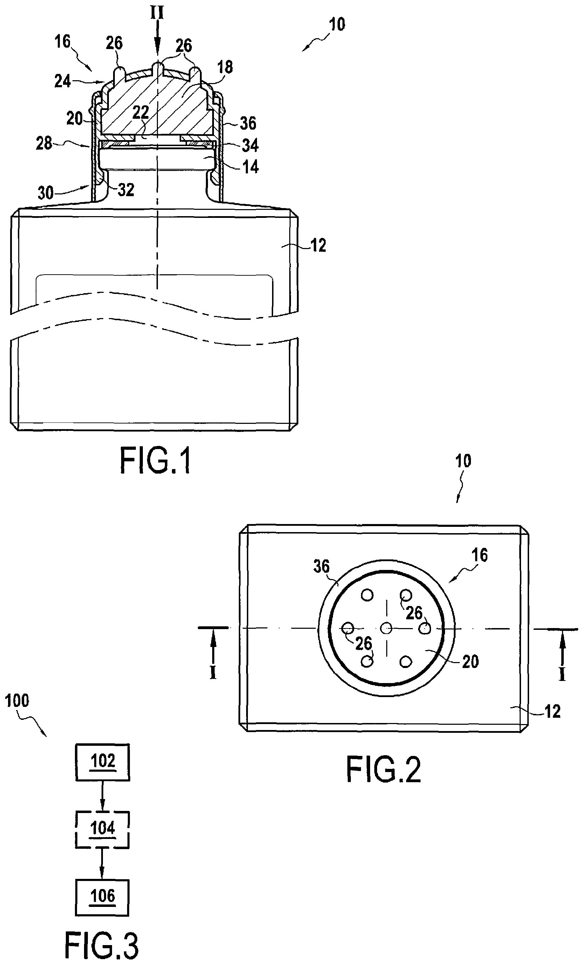

La figure 1 représente une vue en section d'un applicateur 10 de produit cosmétique liquide.

L'applicateur 10 comprend un réservoir 12 présentant un col 14 et un organe d'application 16 de produit cosmétique liquide assemblé sur le col du réservoir 14. Le réservoir 12 comporte des parois rigides. Alternativement, le réservoir 12 comporte des parois flexibles. Le produit cosmétique liquide est contenu dans le réservoir 12.

L'organe d'application 16 comporte un noyau poreux 18 en matériau fritté. Comme exemple de noyau poreux en matériau fritté, on peut citer un noyau poreux comprenant du polypropylène, commercialisé sous la marque Porex^{™}, par exemple tel que défini dans le document WO 2008/021539 auquel le lecteur pourra se référer. Le noyau poreux 18 comporte une porosité ouverte. Par exemple, la taille des pores peut être comprise entre 7 et 300 µm, de préférence entre 30 et 150 µm et la porosité volumique, définie comme le rapport de volume de vide rapporté au volume total, peut être comprise entre 10 et 70 vol.%, de préférence entre 20 et 50 vol.%.

L'organe d'application 16 comporte également une coque 20 surmoulée sur le noyau poreux 18. La coque 20 peut être par exemple en polypropylène.

La coque 20 surmoulée sur le noyau poreux 18 recouvre tout le noyau poreux 18, à l'exception d'un orifice d'entrée 22 du produit cosmétique liquide dans le noyau poreux 18 et d'une pluralité d'orifices de distribution 24 du produit cosmétique liquide hors du noyau poreux 18, c'est-à-dire par le noyau poreux 18.

Sur la figure 1, sur la vue en section, la coque 20 surmoulée sur le noyau poreux 18 comporte trois orifices de distribution 24.

Comme cela est représenté dans le mode de réalisation de la figure 2, la coque 20 surmoulée sur le noyau poreux 18 comporte sept orifices de distribution 24.

Dans le sens d'écoulement du produit cosmétique liquide lors de l'application, c'est-à-dire de la distribution du produit cosmétique liquide du réservoir 12 vers l'extérieur de l'applicateur 10, lorsque l'organe d'application 16 est assemblé sur le réservoir 12, l'orifice d'entrée 22 du produit cosmétique liquide dans le noyau poreux 18 est disposé en amont du noyau poreux 18 et les orifices de distribution 24 du produit cosmétique liquide sont disposés en aval par rapport à l'orifice d'entrée 22. Ainsi, lorsque l'organe d'application 16 est assemblé sur le réservoir 12, on notera que l'orifice d'entrée 22 est disposé en regard de l'ouverture définie par le col 14 du réservoir 12 et que les orifices de distribution 24 sont librement accessibles depuis l'extérieur de l'applicateur 10.

Le noyau poreux 18 comprend des saillies 26 en surface du noyau poreux 18. Ces saillies 26, une fois la coque 20 surmoulée sur le noyau poreux 18, font saillie hors de la coque 20 surmoulée à travers les orifices de distribution 24. Les surfaces des saillies 26 qui sont disposées à l'extérieur de la coque 20 surmoulée forment ensemble une surface d'application du produit cosmétique liquide.

Les saillies 26 peuvent former un motif qui fait saillie de la coque 20 surmoulée. La coque 20 surmoulée peut ainsi couvrir une partie précise du noyau poreux 18, entre les saillies 26, et former un motif tel qu'un logo ou un décor.

Sur la figure 1, la coque 20 surmoulée comprend une jupe de fixation 28 de l'organe d'application 16 sur le réservoir 12. La jupe de fixation 28 de l'organe d'application 16 est formée lors du surmoulage de la coque 20 sur le noyau poreux 18. La jupe de de fixation 28 comporte une pluralité de pattes élastiques comprenant chacune une extrémité libre 30 portant une nervure interne 32 configurée pour coopérer avec le col 14 du réservoir 12.

L'applicateur 10 comporte également un joint d'étanchéité 34 disposé entre le col 14 du réservoir 12 et l'organe d'application 16, plus particulièrement un joint d'étanchéité 34 de forme annulaire disposé entre le col 14 du réservoir 12 et la coque 20 surmoulée afin d'éviter le passage de produit cosmétique liquide entre l'organe d'application 16 et le réservoir 12. Le joint d'étanchéité 34 peut être un joint rapporté ou faire partie intégrante de la coque 20.

Dans le mode de réalisation de la figure 1, l'applicateur 10 comporte en outre une frette de fixation 38 de forme complémentaire à la forme de la jupe de fixation 28 et qui empêche le débattement radial des pattes élastiques de la jupe de fixation 28. La frette de fixation 38 bloque les pattes élastiques en configuration de fixation de l'organe d'application 16 sur le col 14 du réservoir 12. Alternativement, la frette de fixation 38 comporte les pattes de fixation et assure le maintien axial de l'organe d'application 16 qui ne comporte alors plus les pattes de fixation.

Par exemple, la coque 20 surmoulée peut avoir une épaisseur de 0,8 mm, le noyau poreux 18 peut avoir une forme générale de cylindre dont le diamètre est d'environ 15 mm et dont la hauteur maximale, hors saillies 26, est d'environ 7 mm. L'orifice d'entrée 22 peut présenter un diamètre d'environ 6 mm et les orifices de distribution 24 présenter chacun un diamètre d'environ 2 mm.

Le procédé de fabrication 100 de l'organe d'application 16 est illustré à la figure 3.

Lors d'une première étape 102, on fabrique le noyau poreux 18 en matériau fritté. Ce noyau poreux 18 peut être obtenu par frittage de billes de polypropylène dans un moule de frittage. Le moule de frittage peut comporter des creux qui correspondent aux saillies 26 du noyau poreux 18. Les saillies 26 s'étendent au-delà de la surface extérieure de la coque 20 au maximum de 5 mm, voire au maximum de 2 mm, de préférence au maximum de 1 mm.

On va ensuite procéder à une deuxième étape 106 de surmoulage de la coque 20 sur le noyau poreux 18. On dispose ensuite le noyau poreux 18 dans un moule d'injection et on injecte la matière destinée à former la coque 20 dans le moule d'injection, entre le moule d'injection et le noyau poreux 18 pour surmouler la coque 20 sur le noyau poreux 18.

Les paramètres de surmoulage sont connus en soi et peuvent être déterminés facilement en fonction du matériau injecté.

Le matériau injecté est suffisamment fluide, c'est-à-dire a une viscosité suffisamment basse, pour pouvoir pénétrer dans le moule d'injection, entre les parois du moule d'injection et le noyau poreux 18. Le matériau injecté présente également une viscosité suffisamment élevée pour ne pas fermer, sous l'effet de la pression d'injection, toute la porosité ouverte du noyau poreux 18.

Lors de la deuxième étape 104, on peut également injecter de la matière pour former la jupe de fixation 28 de l'organe d'application 16 sur le réservoir 12.

De manière alternative, le moule de frittage peut ne pas comporter de creux et la pièce poreuse en matériau fritté obtenue après frittage des billes de polypropylène peut, par exemple être de forme générale cylindrique. Cette poreuse en matériau fritté est ensuite usinée, au cours d'une étape d'usinage 104 réalisée entre la première étape 102 et la deuxième étape 106, afin de former les saillies 26 sur une face de la pièce poreuse. On obtient ainsi le noyau poreux 18.

Alternativement, le noyau 18 est moulé directement en forme notamment avec ses saillies 26. Par ailleurs, le moule de frittage peut comporter des saillies destinées à former des creux dans le noyau poreux 18.

On comprend que l'étape d'usinage 104 est facultative et dépend de la première étape 102 au cours de laquelle on fabrique le noyau poreux 18. On comprend que même si le noyau poreux 18 est obtenu par moulage dans un moule de frittage comprenant des creux destinés à former les saillies 26 du noyau poreux 18, on peut réaliser ensuite une étape d'usinage 104 afin, par exemple, de réaliser une étape de finition des saillies 26.

On notera que la porosité ouverte du noyau poreux 18 peut être choisie en fonction du produit cosmétique liquide à distribuer, notamment en fonction de la viscosité dudit produit. Inversement, on pourra adapter la formulation du produit cosmétique à distribuer en fonction de la porosité ouverte du noyau poreux 18.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif. Notamment, on comprend que le nombre et l'emplacement des orifices d'entrée et de distribution du produit cosmétique liquide peut varier. En outre, la forme des saillies peut varier et n'est pas limité à la forme cylindrique arrondie représentée sur les figures. Le mode de fixation de l'organe d'application sur le réservoir pourrait être différent. Par exemple, la jupe de fixation pourrait être vissée sur le col du réservoir.

## Revendications

1. Procédé de fabrication (100) d'un organe d'application (16) de produit cosmétique liquide comprenant les étapes suivantes:
- fabrication (102) d'un noyau oreux (18) en matériau fritté comportant au moins une saillie (26);
- surmoulage (106) d'une coque (20) sur le noyau poreux (18), la coque (20) comprenant au moins un orifice d'entrée (22) de produit cosmétique dans le noyau et au moins un orifice de distribution (24) de produit cosmétique par le noyau, le procédé étant **caractérisé en ce que** la au moins une saillie (26) du noyau poreux (18) fait saillie hors de la coque (20) surmoulée à travers le au moins un orifice de distribution (24) au maximum de 5 mm, voire au maximum de 2 mm, de préférence au maximum de 1 mm.

2. Procédé (100) selon la revendication 1, dans lequel la fabrication du noyau poreux (18) comporte une étape d'usinage (104) du noyau poreux (18).

3. Procédé (100) selon la revendication 1 ou 2, dans lequel le matériau fritté comprend une polyoléfine, par exemple du polypropylène ou du polyéthylène.

4. Procédé (100) selon la revendication 1 ou 2, dans lequel le matériau fritté comprend un polyester, par exemple du polytéréphtalate d'éthylène ou du verre.

5. Procédé (100) selon l'une quelconque des revendications 1 à 4, dans lequel la coque (20) surmoulée comprend un polymère comprenant une polyoléfine, par exemple du polypropylène ou du polyéthylène.

6. Procédé (100) selon l'une quelconque des revendications 1 à 4, dans lequel la coque (20) surmoulée comprend un polymère comprenant un polyester, par exemple du polytéréphtalate d'éthylène ou du PCTA.

7. Procédé (100) selon l'une quelconque des revendications 1 à 4, dans lequel la coque (20) surmoulée comprend un polymère souple, par exemple un copolymère séquencé styrène-éthylène-butylène-styrène (SEBS).

8. Procédé (100) selon l'une quelconque des revendications 1 à 7, dans lequel la coque (20) surmoulée a une épaisseur inférieure à 2,0 mm, de préférence inférieure à 1,5 mm, encore plus de préférence inférieure à 1,0 mm.

9. Procédé (100) selon l'une quelconque des revendications 1 à 8, dans lequel la coque (20) surmoulée comprend une jupe de fixation (28) de l'organe d'application (16) sur un réservoir (12).

10. Organe d'application (16) de produit cosmétique liquide comprenant un noyau (18) et une coque (20), l'organe d'application (16) étant obtenu par le procédé selon l'une quelconque des revendications 1 à 9.

11. Applicateur (10) de produit cosmétique liquide à distribuer comprenant un réservoir (12) destiné à contenir le produit cosmétique à distribuer et un organe d'application (16) selon la revendication 10, l'organe d'application étant assemblé sur le réservoir.

## Patentansprüche

1. Verfahren zur Herstellung (100) eines Elements zum Applizieren (16) eines flüssigen Kosmetikprodukts, umfassend die folgenden Schritte:
- Herstellen (102) eines porösen Kerns (18) aus Sinterwerkstoff, der wenigstens einen Vorsprung (26) aufweist,
- Anformen (106) einer Schale (20) an den porösen Kern (18), wobei die Schale (20) wenigstens eine Öffnung für den Einlass (22) von Kosmetikprodukt in den Kern und wenigstens eine Öffnung für die Abgabe (24) von Kosmetikprodukt durch den Kern umfasst,
wobei das Verfahren **dadurch gekennzeichnet ist, dass** der wenigstens eine Vorsprung (26) des porösen Kerns (18) durch die wenigstens eine Abgabeöffnung (24) maximal um 5 mm, ja sogar maximal um 2 mm, vorzugsweise maximal um 1 mm, aus der angeformten Schale (20) herausragt.

2. Verfahren (100) nach Anspruch 1, bei dem die Herstellung des porösen Kerns (18) einen Schritt des Bearbeitens (104) des porösen Kerns (18) umfasst.

3. Verfahren (100) nach Anspruch 1 oder 2, bei dem der Sinterwerkstoff ein Polyolefin, beispielsweise Polypropylen oder Polyethylen, umfasst.

4. Verfahren (100) nach Anspruch 1 oder 2, bei dem der Sinterwerkstoff einen Polyester, beispielsweise Polyethylenterephthalat oder Glas, umfasst.

5. Verfahren (100) nach einem der Ansprüche 1 bis 4, bei dem die angeformte Schale (20) ein Polymer umfasst, das ein Polyolefin, beispielsweise Polypropylen oder Polyethylen, umfasst.

6. Verfahren (100) nach einem der Ansprüche 1 bis 4, bei dem die angeformte Schale (20) ein Polymer umfasst, das einen Polyester, beispielsweise Polyethylenterephthalat oder PCTA, umfasst.

7. Verfahren (100) nach einem der Ansprüche 1 bis 4, bei dem die angeformte Schale (20) ein flexibles Polymer umfasst, beispielsweise ein Styrol-Ethylen-Butylen-Styrol (SEBS)-Blockcopolymer.

8. Verfahren (100) nach einem der Ansprüche 1 bis 7, bei dem die angeformte Schale (20) eine Dicke von weniger als 2,0 mm, vorzugsweise weniger als 1,5 mm, weiterhin bevorzugt weniger als 1,0 mm aufweist.

9. Verfahren (100) nach einem der Ansprüche 1 bis 8, bei dem die angeformte Schale (20) eine Schürze zum Befestigen (28) des Applizierelements (16) an einem Vorratsbehälter (12) umfasst.

10. Element zum Applizieren (16) eines flüssigen Kosmetikprodukts, umfassend einen Kern (18) und eine Schale (20), wobei das Applizierelement (16) durch das Verfahren nach einem der Ansprüche 1 bis 9 erhalten wird.

11. Applikator (16) für ein flüssiges Kosmetikprodukt, umfassend einen Vorratsbehälter (12), der dazu bestimmt ist, das auszugebende Kosmetikprodukt zu enthalten, und ein Applizierelement (16) nach Anspruch 10, wobei das Applizierelement an dem Vorratsbehälter angebracht ist.

## Claims

1. A method (100) of fabricating an applicator member (16) for applying a liquid cosmetic, the method comprising the following steps:
- making (102) a porous core (18) comprising at least one projection (26), out of sintered material; and
- overmolding (106) a shell (20) on the porous core (18), the shell (20) having at least one inlet orifice (22) for admitting liquid cosmetic into the core and at least one dispenser orifice (24) for enabling the core to dispense liquid cosmetic, the method being **characterized in that** the at least one projection (26) of the porous core (18) projects out of the overmolded shell (20) through the at least one dispenser orifice (24) at most by 5 mm, or at most by 2 mm, preferably at most by 1 mm.

2. A method (100) according to claim 1, wherein the making of the porous core (18) includes a step of machining (104) the porous core (18).

3. A method (100) according to claim 1 or claim 2, wherein the sintered material comprises a polyolefin, for example polypropylene or polyethylene.

4. A method (100) according to claim 1 or claim 2, wherein the sintered material comprises a polyester, for example polyethylene terephthalate, or glass.

5. A method (100) according to any one of claims 1 to 4, wherein the overmolded shell (20) comprises a polymer comprising a polyolefin, for example polypropylene or polyethylene.

6. A method (100) according to any one of claims 1 to 4, wherein the overmolded shell (20) comprises a polymer comprising a polyester, for example polyethylene terephthalate or PCTA.

7. A method (100) according to any one of claims 1 to 4, wherein the overmolded shell (20) comprises a flexible polymer, for example a sequenced styrene-ethylenebutylene-styrene (SEBS) copolymer.

8. A method (100) according to any one of claims 1 to 7, wherein the overmolded shell (20) has thickness less than 2.0 mm, preferably less than 1.5 mm, more preferably less than 1.0 mm.

9. A method (100) according to any one of claims 1 to 8, wherein the overmolded shell (20) includes a fastener skirt (28) for fastening the applicator member (16) on a reservoir (12).

10. An applicator member (16) for applying a liquid cosmetic, the member comprising a core (18) and a shell (20), the applicator member (16) being obtained by the method according to any one of claims 1 to 9.

11. An applicator (10) for a liquid cosmetic that is to be dispensed, the applicator comprising a reservoir (12) for containing the liquid cosmetic for dispensing and an applicator member (16) according to claim 10, the applicator member being assembled on the reservoir.
